# EUROPÄISCHE PATENTANMELDUNG

(11) **EP 3 534 132 A1**
(43) Veröffentlichungstag der Anmeldung: **04.09.2019**
(21) Anmeldenummer: 18159639.6
(22) Anmeldetag: 02.03.2018
(51) Int. Cl.: G01L 19/00, G01L 13/06, G01L 15/00, G01L 19/06, G01L 19/14

(54) **DRUCKSENSOR**

(71) Anmelder: Grundfos Holding A/S, 8850 Bjerringbro (DK)
(72) Erfinder: Søren Kjeldsen,, 8830 Tjele (DK)
(74) Vertreter: Patentanwälte Vollmann Hemmer Lindfeld Partnerschaft mbB

(57) **Zusammenfassung**

Die Erfindung betrifft einen Drucksensor mit zumindest einem Messelement (64) und zumindest einem in einem Sensorkörper (34) angeordneten Fluidkanal (70), welcher eine Druckaufnahmeöffnung (74) mit dem Messelement (64) verbindet, wobei der Fluidkanal (70) zumindest eine Querschnitts- und/oder Richtungsänderung aufweist, und, dass zumindest ein Abschnitt des Fluidkanals (70), in welchem die zumindest eine Querschnitts- und/oder Richtungsänderung gelegen ist, in einer in einem generativen Fertigungsverfahren gefertigten Struktur (44) des Sensorkörpers (34) ausgebildet ist, sowie ein Pumpenaggregat mit einem solchen Drucksensor.

## Beschreibung

Die Erfindung betrifft einen Drucksensor sowie ein Pumpenaggregat mit einem solchen Drucksensor.

Es sind Drucksensoren bekannt, um in verschiedensten Anlagen oder Maschinen Fluiddrücke zu erfassen. Dies ist beispielsweise bei Pumpenaggregaten, insbesondere Kreiselpumpenaggregaten der Fall, bei welchen es beispielsweise erwünscht sein kann, den Ausgangsdruck und/oder auch den Differenzdruck zwischen Ein- und Ausgang zu erfassen.

In derartigen Drucksensoren ist es üblich die eigentlichen Druckmesselemente über Fluidkanäle mit Druckaufnahmeöffnungen zu verbinden, welche in den Anlagenteilen bzw. Strömungswegen, in welchen der Druck gemessen werden soll, positioniert sind. Problematisch bei derartigen Sensoren ist, dass es zu unerwünschten Beschädigungen der Messelemente oder Beeinträchtigungen des Messergebnisses beispielsweise durch Verunreinigungen kommen kann. So können beispielsweise durch starke Druckschwankungen Beschädigungen an den Messelementen bewirken oder es kann zu Kavitationserscheinungen kommen.

Es ist Aufgabe der Erfindung, einen Drucksensor dahingehend zu verbessern, dass Beschädigungen eines Messelementes verhindert werden können. Darüber hinaus ist es Aufgabe der Erfindung ein Pumpenaggregat mit einem solchen verbesserten Drucksensor bereitzustellen.

Diese Aufgabe wird gelöst durch einen Drucksensor mit den in Anspruch 1 angegebenen Merkmalen sowie durch ein Pumpenaggregat mit den im Anspruch 16 angegebenen Merkmalen. Bevorzugte Ausführungsformen ergeben sich aus den Unteransprüchen, der nachfolgenden Beschreibung sowie den beigefügten Figuren.

Der erfindungsgemäße Drucksensor weist zumindest ein Messelement und zumindest einen in einem Sensorkörper angeordneten Fluidkanal auf. Der Fluidkanal verbindet eine Druckaufnahmeöffnung mit dem Messelement und überträgt so den Druck von der Druckaufnahmeöffnung zu dem Messelement, vorzugsweise dadurch, dass der Fluidkanal mit dem Fluid, in welchem der Druck gemessen werden soll, gefüllt ist. Erfindungsgemäß ist vorgesehen, dass der Fluidkanal zumindest eine Querschnitts- und/oder Richtungsänderung aufweist. Durch derartige Richtungsänderungen ist es möglich Druckstöße im Kanal durch Reflektion an den Wandungen zu dämpfen, sodass plötzliche Druckänderungen nicht als Impuls auf das eigentliche Messelement wirken. Dadurch kann das Risiko von Beschädigungen vermindert werden. Durch Querschnittsänderungen können darüber hinaus Expansions- oder Dämpfungsräume geschaffen werden, welche dazu dienen können, Kavitationserscheinungen zu reduzieren. Darüber hinaus können auch Strukturen ausgebildet werden, in denen sich Partikel ablagern können um zu verhindern, dass diese sich direkt an dem Messelement anlagern oder das Messergebnis beeinträchtigen.

Erfindungsgemäß ist vorgesehen, dass zumindest ein Abschnitt des Fluidkanals, in welchem die genannte zumindest eine Querschnitts- und/oder Richtungsänderung gelegen ist, in einer Struktur des Sensorkörpers ausgebildet ist, welche in einem generativen bzw. additiven Fertigungsverfahren ausgebildet bzw. generiert worden ist. Derartige generative Fertigungsverfahren werden auch als 3D-Druck bezeichnet. Es kann sich dabei beispielsweise um ein selektives Laserschmelzen, selektives Lasersintern, Elektronenstrahlschmelzen oder andere generative bzw. additive Fertigungsverfahren handeln. Diese Fertigungsverfahren haben den Vorteil, dass sehr komplexe Strukturen, welche sich in herkömmlichen spanenden oder urformenden Fertigungsverfahren nur schwer oder gar nicht ausbilden lassen, erzeugt werden können. So können komplizierte Richtungs- bzw. Querschnittsänderungen des Fluidkanals problemlos ausgebildet werden. Das generative Fertigungsverfahren eröffnet hierzu gänzlich neue Möglichkeiten. Besonders bevorzugt wird ein Metallpulver mithilfe eines Elektronen- oder Laserstrahls selektiv aufgeschmolzen, sodass die Struktur schichtweise ausgebildet wird.

Vorzugsweise handelt es sich bei der in einem generativen Fertigungsverfahren gefertigten Struktur um eine Struktur aus Kunststoff oder Metall. Besonders bevorzugt ist die Struktur aus rostfreiem Edelstahl gefertigt. Dazu wird in dem generativen Fertigungsprozess beispielsweise ein Pulver aus rostfreiem Edelstahl aufgeschmolzen und schichtweise aufgetragen. Es können jedoch auch andere Metalle oder insbesondere auch Metallgemische oder sonstige Materialkombinationen in dem generativen Fertigungsverfahren in die gewünschte Form gebracht werden.

Die in dem generativen Fertigungsverfahren gefertigte, den Abschnitt des Fluidkanals ausbildende Struktur ist besonders bevorzugt einstückig ausgebildet. Dies ist vorteilhaft, da so die Zahl erforderlicher und abzudichtender Schnittstellen verringert werden kann, sodass die Zuverlässigkeit des Drucksensors erhöht und gleichzeitig die Montage vereinfacht werden kann.

Gemäß einer bevorzugten Ausführungsform der Erfindung weist der Fluidkanal innerhalb der in einem generativen Fertigungsverfahren gefertigten Struktur mehrere Richtungsänderungen und insbesondere einen zick-zack- und/oder mäanderförmigen Verlauf auf. Durch diese mehreren Richtungsänderungen werden Druckimpulse, welche sich von der Druckaufnahmeöffnung zu dem Messelement hin in dem Fluidkanal fortpflanzen gedämpft bzw. verringert, sodass eine Beschädigung des Messelementes verhindert werden kann.

Gemäß einer weiteren bevorzugten Ausführungsform weist der Fluidkanal innerhalb der in einem generativen Fertigungsverfahren gefertigten Struktur mehrere Richtungsänderungen in zumindest zwei unterschiedlichen Ebenen auf. Dies hat zum einen den Vorteil, dass der Bauraum in dem Sensorkörper optimal ausgenutzt werden kann. Zum anderen können die Dämpfungseigenschaften zur Reduzierung von Druckimpulsen in der Formgebung in mehreren Dimensionen, insbesondere in drei Dimensionen gestaltet werden. Dadurch lassen sich noch bessere Dämpfungseigenschaften realisieren. Das Generieren des Fluidkanals in einem generativen Fertigungsprozess ermöglicht dabei eine sehr freie Formgebung, welche komplexe Fluidkanal-Verläufe in allen Raumrichtungen ermöglicht.

Weiter bevorzugt weist der Fluidkanal innerhalb der in einem generativen Fertigungsverfahren gefertigten Struktur eine Form auf, welche zumindest eine Reflektion einer durch die Druckaufnahmeöffnung in dem Fluidkanal eintretenden Druckwelle bewirkt. Dies ist von Vorteil, um derartige Druckwellen bzw. Impulse im Fluidkanal zu dämpfen, bevor sie das Messelement erreichen.

Gemäß einer weiteren besonderen Ausführungsform der Erfindung weist der Fluidkanal innerhalb der in einem generativen Fertigungsverfahren gefertigten Struktur zumindest einen, vorzugsweise mehrere Expansionsräume auf. Derartige Expansionsräume eignen sich insbesondere dazu plötzliche Druckabnahmen zu dämpfen, um Kavitationserscheinungen zu verhindern. Darüber hinaus können derartige Expansionsräume auch dazu genutzt werden, dass sich dort gezielt mögliche Verunreinigungen ansammeln können, um ein Verstopfen des Fluidkanals zu verhindern.

Gemäß einer weiteren möglichen Ausführungsform der Erfindung weist der Fluidkanal innerhalb der in einem generativen Fertigungsverfahren gefertigten Struktur zumindest eine Verzweigung auf, wobei der Fluidkanal vorzugsweise zu mehreren Messelementen verzweigt. Diese Anordnung hat den Vorteil, dass verschiedene Messungen gleichzeitig durchgeführt werden können. Darüber hinaus können verschiedene Kanalverläufe mit unterschiedlichen Eigenschaften generiert werden, welche vorzugsweise jeweils einem Messelement zugeordnet sind. Durch Auswahl des entsprechenden Messelementes kann der Sensor so an verschiedene Einsatzfälle angepasst werden, indem so der für den jeweiligen Einsatzzweck passende Fluidkanal bzw. Abschnitt eines Fluidkanals ausgewählt wird. Auch derartige Verzweigungen lassen sich in einem generativen Fertigungsverfahren sehr günstig ausbilden.

Gemäß einer weiteren besonderen Ausführungsform der Erfindung sind in dem Sensorkörper mehrere Fluidkanäle ausgebildet, welche eine oder mehrere Druckaufnahmeöffnungen mit jeweils einem Messelement verbinden. Über Verzweigungen können mehrere Messelemente mit einer Druckaufnahmeöffnung verbunden werden. Es ist jedoch auch möglich mehrere vollständig voneinander getrennte Fluidkanäle auszubilden, welche jeweils ein Messelement mit einer separaten Druckaufnahmeöffnung verbinden. Bevorzugt weisen diese mehreren Fluidkanäle zumindest einen Abschnitt in einer in einem generativen Fertigungsverfahren gefertigten Struktur auf. Weiter bevorzugt können diese Fluidkanäle zumindest eine Querschnitts- und/oder Richtungsänderung aufweisen, wie sie vorangehend beschrieben wurden. Eine solche Ausgestaltung mit mehreren Fluidkanälen eignet sich dazu, in dem Drucksensor Drücke in verschiedenen Bereichen einer Anlage bzw. Maschine messen zu können, beispielsweise den Differenzdruck zwischen Ein- und Ausgangsseite in einem Pumpenaggregat. Darüber hinaus können verschiedene Messelemente bereitgestellt werden, welche, wie vorangehend beschrieben wurde, je nach Einsatzfall des Drucksensors wahlweise aktiviert werden können. Die Auswahl des entsprechenden Messelementes kann dann insbesondere in der Auswertelektronik, insbesondere als reine Softwarefunktion realisiert werden, sodass der Einsatzbereich des Drucksensors erweitert werden kann.

Gemäß einer weiteren bevorzugten Ausführungsform der Erfindung kann der Fluidkanal innerhalb der in einem generativen Fertigungsverfahren gefertigten Struktur zumindest ein Ventil aufweisen, welches vorzugsweise ebenfalls in einem generativen Fertigungsverfahren gefertigt ist. Ein solches Ventil kann beispielsweise dazu dienen, unterschiedliche Strömungswege durch Umschalten des Ventils aktivieren zu können, beispielsweise um Verbindungen zu verschiedenen Messelementen herzustellen. In einem solchen Ventil kann das bewegliche Ventilelement bevorzugt ebenfalls in dem generativen Fertigungsverfahren hergestellt werden, sodass idealerweise eine Montage entfällt.

Gemäß einer weiteren besonderen Ausführungsform der Erfindung kann ein weiterer Abschnitt des zumindest einen Fluidkanals in einem Bauteil ausgebildet sein, mit welchem die in einem generativen Fertigungsverfahren generierte Struktur durch den generativen Fertigungsvorgang verbunden ist. Das heißt dieser weitere Abschnitt des Fluidkanals kann in einem vorgefertigten Bauteil ausgebildet sein, auf welchen dann die in generativen Fertigungsverfahren gefertigte Struktur ausgebildet bzw. aufgedruckt ist. So kann beispielsweise auf einen metallischen vorgefertigten Grundkörper, in welchem ein Abschnitt des Fluidkanals ausgebildet ist, die weitere Struktur in einem generativen Fertigungsverfahren aufgeschmolzen werden. Diese Ausgestaltung hat den Vorteil, dass idealerweise nur diejenigen Strukturen, welche herkömmlich schwer zu realisieren sind, in dem generativen Fertigungsverfahren ausgebildet werden, während die anderen Abschnitte bzw. Bauteile des Sensorkörpers vorzugsweise herkömmlich beispielsweise in einem umformenden und/oder spanenden Fertigungsverfahren ausgebildet werden können. Dies ist insbesondere deshalb von Vorteil, da die Bearbeitungszeiten für die generativen Fertigungsverfahren sehr lang sind.

Gemäß einer weiteren bevorzugten Ausführungsform der Erfindung ist der Drucksensor als Differenzdrucksensor ausgebildet, bei welchem ein erster Fluidkanal mit einer ersten Seite eines Differenzdruckmesselementes und ein zweiter Fluidkanal mit einer zweiten Seite des Differenzdruckmesselementes verbunden ist. Die Fluidkanäle enden vorzugsweise jeweils in einer Druckaufnahmeöffnung, durch welche der Druck in den Fluidkanal eintreten kann bzw. in dem Fluidkanal wirken kann. Zumindest einer der Fluidkanäle, vorzugsweise beide Fluidkanäle weisen jeweils zumindest eine Querschnitts- und/oder Richtungsänderung auf. Ferner ist vorzugsweise zumindest ein Abschnitt eines der beiden Fluidkanäle in einer Struktur ausgebildet, welche in einem generativen Fertigungsverfahren gefertigt wurde, wie es vorangehend beschrieben wurde.

Vorzugsweise ist in zumindest einem der Fluidkanäle in der in einem generativen Fertigungsverfahren gefertigten Struktur eine Druckstöße dämpfende Formgebung des Fluidkanals ausgebildet. Diese ist vorzugsweise derjenige Fluidkanal, in welchem der höhere Druck wirkt, beispielsweise bei Einsatz in einem Pumpenaggregat derjenige Fluidkanal, welcher das Messelement mit der Druckseite des Pumpenaggregates verbindet.

Weiter bevorzugt ist in zumindest einem der Fluidkanäle in dem Differenzdrucksensor zumindest ein Abschnitt vorhanden, welcher in einer in einem generativen Fertigungsverfahren gefertigten Struktur gelegen ist, wobei in dieser Struktur eine kavitationsverringernde Formgebung des Fluidkanals, beispielsweise in Form eines Erweiterungsraumes, ausgebildet ist. Dieser zweite Fluidkanal ist dabei in dem Differenzdrucksensor vorzugsweise derjenige Kanal, in welchem der niedrigere Druck wirkt. Bei Verwendung des Drucksensors in einem Pumpenaggregat ist dies vorzugsweise derjenige Fluidkanal, welcher das Messelement mit der Saugseite des Pumpenaggregates verbindet.

Gemäß einer weiteren möglichen Ausführungsform der Erfindung weist der Drucksensor zumindest zwei Fluidkanäle auf, welche jeweils zumindest einen Abschnitt aufweisen, in welchem die zumindest eine Querschnitts- und/oder Richtungsänderung gelegen ist und welcher in einer in einem generativen Fertigungsverfahren gefertigten Struktur des Sensorkörpers ausgebildet ist, wobei die mehreren Fluidkanäle vorzugsweise eine unterschiedliche Gestalt aufweisen. So können die Fluidkanäle an die jeweiligen Anforderungen genau angepasst werden. Besonders bevorzugt können verschiedene Fluidkanäle mit unterschiedlichen Funktionen bereitgestellt werden, welche jeweils mit einem Messelement verbunden sind, wobei die Messelemente, wie es oben beschrieben wurde, wahlweise aktiviert werden können, je nach Einsatzfall des Drucksensors.

Gegenstand der Erfindung ist neben dem beschriebenen Drucksensor ein Pumpenaggregat, welches einen derartigen Drucksensor, wie er vorangehend beschrieben wurde, aufweist. Vorzugsweise handelt es sich bei diesem Drucksensor um einen Differenzdrucksensor, welcher zwischen der Saug- und der Druckseite des Pumpenaggregates angeordnet ist, sodass der Differenzdruck über der Pumpe erfasst werden kann. Die Fluidkanäle können dabei vorzugsweise in der oben beschriebenen Weise ausgebildet sein, um Druckstöße auf das Messelement und/oder unerwünschte Kavitationserscheinungen zu minimieren.

Nachfolgend wird die Erfindung beispielhaft anhand der beigefügten Figuren beschrieben. In diesen zeigt:
- Fig. 1: eine Schnittansicht eines mehrstufigen Kreiselpumpenaggregats gemäß der Erfindung,
- Fig. 2: eine Schnittansicht eines Basis- oder Fußgehäuses eines mehrstufigen Kreiselpumpenaggregates mit einem darin angeordneten Drucksensor,
- Fig. 3: eine perspektivische Explosionsansicht eines erfindungsgemäßen Drucksensors,
- Fig. 4: eine perspektivische Explosionsansicht des Drucksensors gemäß Fig. 3 mit Sicht auf das Elektronikgehäuse,
- Fig. 5A: eine teilweise transparente Ansicht eines Gehäusekörpers des Drucksensors gemäß Fig. 3 und 4,
- Fig. 5B: eine Schnittansicht des Gehäusekörpers gemäß Fig. 5A,
- Fig. 6: eine Schnittansicht des Drucksensors gemäß Fig. 3 und 4,
- Fig. 7: ein erstes alternatives Ausführungsbeispiel für Fluidkanäle in einem Drucksensor,

- Fig. 8: ein zweites alternatives Ausführungsbeispiel für eine Anordnung von Fluidkanälen in einem Drucksensor,
- Fig. 9: ein drittes alternatives Ausführungsbeispiel für die Anordnung von Fluidkanälen in einem Drucksensor,
- Fig. 10: ein viertes alternatives Ausführungsbeispiel für die Anordnung von Fluidkanälen in einem Drucksensor,
- Fig. 11: eine Schnittansicht eines weiteren Ausführungsbeispiels eines Fluidkanals in einem erfindungsgemäßen Drucksensor und
- Fig. 12: eine schematische Schnittansicht eines weiteren Ausführungsbeispiels eines Fluidkanals in einem erfindungsgemäßen Drucksensor.

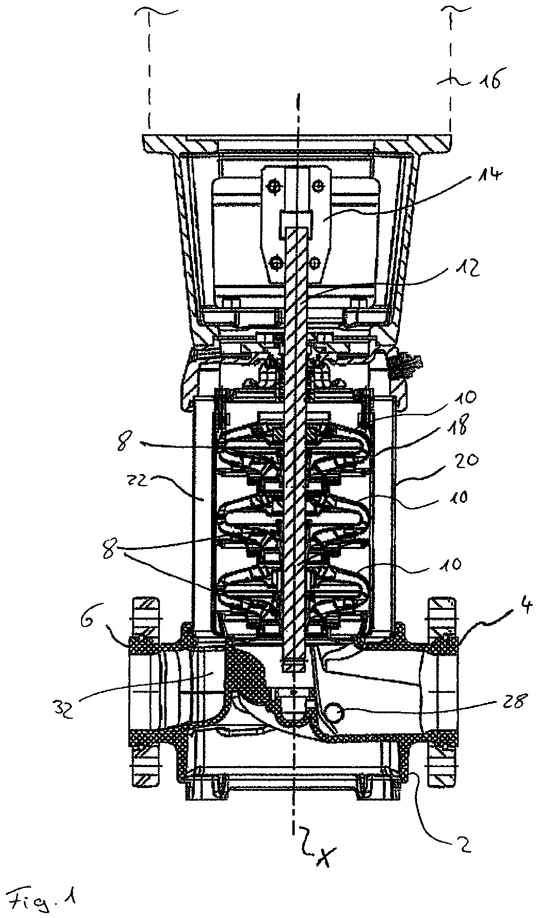

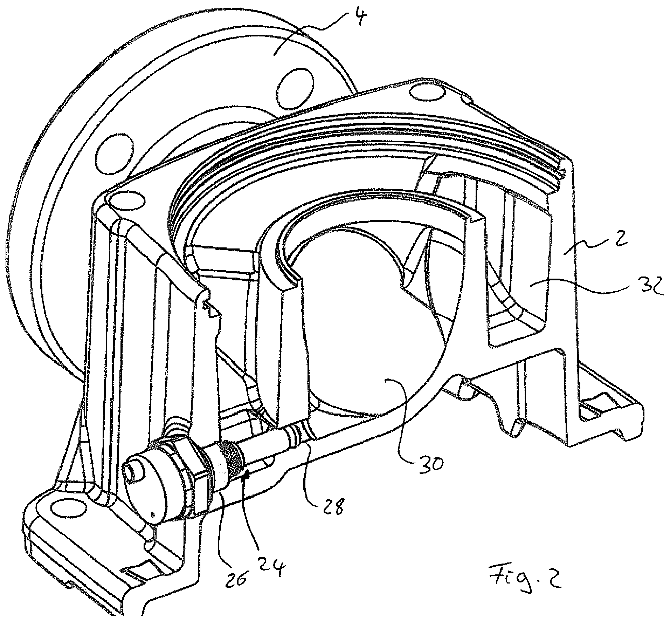

Fig. 1 zeigt in einer Schnittansicht ein mehrstufiges Kreiselpumpenaggregat als Beispiel für ein Pumpenaggregat gemäß der Erfindung, in welchem ein erfindungsgemäßer Drucksensor zum Einsatz kommt. Das gezeigte Pumpenaggregat weist ein Fuß- bzw. Basisgehäuse 2 auf, an welchem ein Einlassstutzen 4 und ein Auslassstutzen 6 ausgebildet sind. An das Basisgehäuse 2 angesetzt sind in diesem Ausführungsbeispiel drei Pumpstufen, welche jeweils aus einem Laufrad 8 und zwischenliegenden Leitapparaten 10 gebildet werden. Die Laufräder 8 sind auf einer gemeinsamen Welle 12 angeordnet, welche über eine Kupplung 14 mit einem hier nur schematisch gezeigten Antriebsmotor 16 verbunden ist. Die einzelnen Pumpenstufen sind in einem inneren rohrförmigen Gehäuse 18 gelegen, welches beabstandet von einem äußeren Gehäuse 20, welches ebenfalls rohrförmig ausgestaltet ist, umgeben ist. So wird zwischen den Gehäusen 18 und 20 ein ringförmiger Kanal 22 gebildet, welcher als Druckkanal dient und die Ausgangseite der Pumpenstufen mit dem Auslass- bzw. Druckstutzen 6 in dem Basisgehäuse 2 verbindet. Wie in Fig. 2 gezeigt, ist in dem Basisgehäuse 2 ein Drucksensor 24 angeordnet. Der Drucksensor 24 ist durch eine Öffnung 26 in der äußeren Gehäusewandung des Basisgehäuses 2 eingesetzt. Dieser Öffnung 26 gegenüberliegend ragt der Drucksensor 24 in eine Öffnung 28 in einer Wandung des im Inneren des Basisgehäuses 2 gebildeten Saugkanals 30 hinein. So erstreckt sich der Drucksensor 24 durch einen Ringraum 32 hindurch. Der Ringraum 32 schließt sich in dem Basisgehäuse 2 an den ringförmigen Kanal 22 an und stellt die Verbindung zu dem Druckstutzen 6 her. Durch die Anordnung des Drucksensors 24 in dieser Weise kann der Drucksensor 24 sowohl den druckseitigen Druck im Ringraum 32 als auch den saugseitigen Druck im Saugkanal 30 und damit den Differenzdruck zwischen Ein- und Ausgangsseite des Pumpenaggregates erfassen.

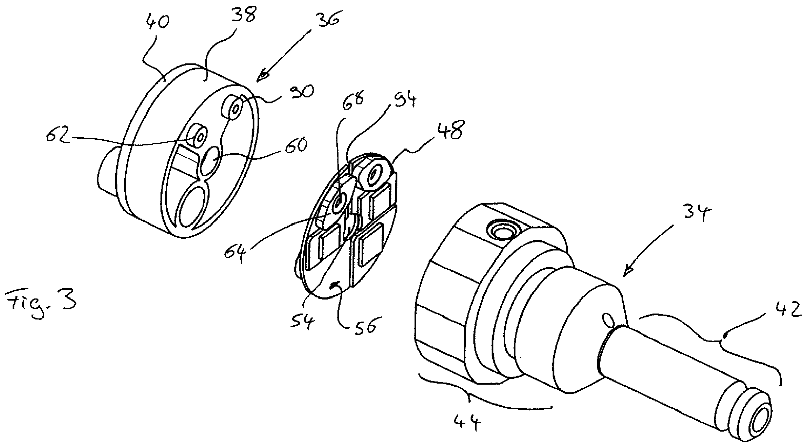

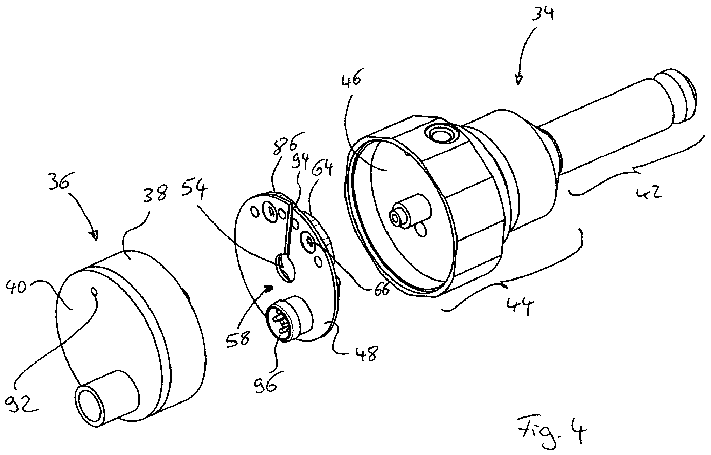

Der Aufbau des Drucksensors wird näher anhand der Fig. 3 bis 5 beschrieben. Der Drucksensor 24 besteht aus einem Sensorkörper 34 und einem Elektronikgehäuse 36. Das Elektronikgehäuse 36 weist einen Gehäusekörper 38 und einen diesen verschließenden Deckel 40 auf. Der Sensorkörper 34, und das Elektronikgehäuse 36 bilden gemeinsam ein Sensorgehäuse, welches alle wesentlichen Komponenten des Drucksensors enthält.

Der Sensorkörper 34 ist aus zwei Abschnitten 42 und 44 gebildet. Der erste Abschnitt 42 des Sensorkörpers bildet einen Sensorfinger, welcher sich, wie in Fig. 2 gezeigt, durch den Ringraum 32 in die Öffnung 28 hinein erstreckt. Der sich anschließende zweite Abschnitt 44 des Sensorkörpers grenzt an das Elektronikgehäuse 36 an. Der zweite Abschnitt 44 umschließt gemeinsam mit dem Gehäusekörper 38 einen Aufnahmeraum 46, in welchem eine Leiterplatte 48 mit der eigentlichen Messelektronik des Drucksensors angeordnet ist.

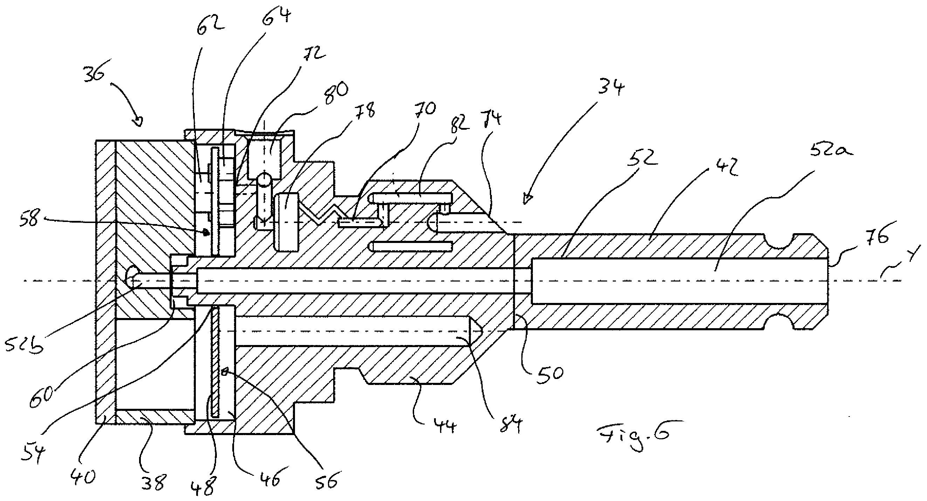

Der erste Abschnitt des Sensorkörpers 42 und der zweite Abschnitt des Sensorkörpers 44 sind in einer Verbindungsebene 50, welche in Fig. 6 dargestellt ist, miteinander verbunden. Dabei ist bei dem hier gezeigten Drucksensor der erste Abschnitt 42 im Herstellungsprozess zunächst als vorgefertigtes Bauteil bereitgestellt, beispielsweise als spanend aus einem Rundstahl gefertigtes Bauteil. Der zweite Abschnitt 44 hingegen ist in einem generativen bzw. additiven Fertigungsverfahren, das heißt im sogenannten 3D-Druck, an das vorgefertigte Bauteil, welches den ersten Abschnitt 42 bildet, angeformt. Das heißt, der zweite Abschnitt 44 ist additiv direkt auf dem ersten Abschnitt 42, welcher vorgefertigt ist, generiert worden. Dabei kommt es an der Verbindungsebene 50 zu einer Verschweißung beider Bauteile, sodass diese im Ergebnis einteilig ausgebildet sind. Im gezeigten Beispiel sind beide Teile aus demselben Material, vorzugsweise rostfreiem Edelstahl, gefertigt.

Der gesamte Sensorkörper 34 ist in seiner Längsrichtung Y von einem ersten Fluidkanal 52 durchzogen. Dabei weist der erste Fluidkanal 52 einen ersten Kanalabschnitt 52a und einen zweiten Kanalabschnitt 52b auf. Der erste Kanalabschnitt 52a erstreckt sich in dem Sensorkörper 34. Eine Verlängerung dieses Kanalabschnittes, welcher ebenfalls Teil des ersten Fluidkanals 52 ist, erstreckt sich in dem Gehäusekörper 38 als zweiter Kanalabschnitt 52b. In dem ersten Abschnitt 42 des Sensorkörpers 34 kann der erste Fluidkanal 52 beispielsweise im Bohrverfahren ausgebildet werden. In dem zweiten Abschnitt des Sensorkörpers 44 wird der erste Fluidkanal 52 direkt in der generativ gefertigten Struktur ausgebildet.

Die Leiterplatte 48 weist in ihrem Zentrum eine Ausnehmung 54 in Form eines zentralen Loches auf. Dieses dient dazu, dass sich der erste Fluidkanal 52 durch die Leiterplatte 48 hindurch erstrecken kann. Dabei ist der erste Abschnitt 52a des Fluidkanals 52 im Wesentlichen, das heißt zu seinem größten Teil, an einer ersten distalen Seite 56 der Leiterplatte 48 gelegen. Die erste Seite 56 ist zu dem freien bzw. distalen Ende des Sensorkörpers 34 hin gewandt, während die entgegengesetzte zweite Seite 58 der Leiterplatte dem Gehäusekörper 38 zugewandt ist. Zwischen dem Sensorkörper 34 und dem Gehäusekörper 38 ist eine gedichtete Schnittstelle 60 ausgebildet, an welcher der erste Kanalabschnitt 52a mit dem zweiten Kanalabschnitt 52b verbunden ist.

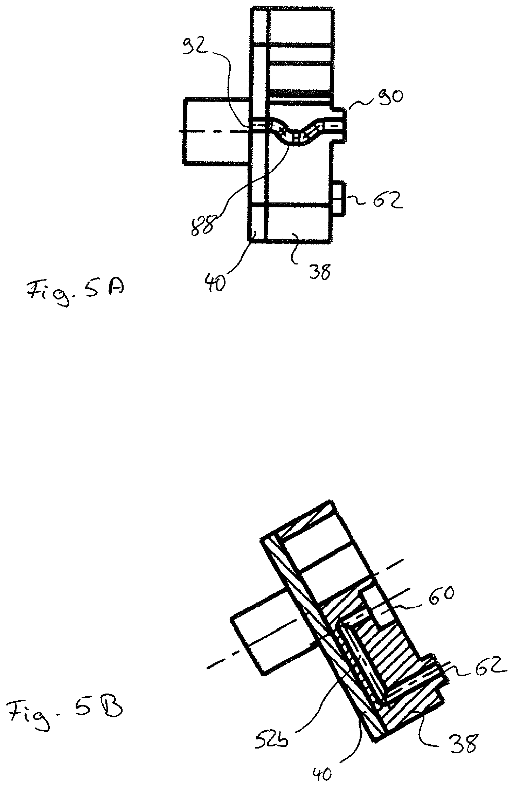

In dem Gehäusekörper 38 erstreckt sich der zweite Kanalabschnitt 52b, wie in Fig. 5B im Schnitt gezeigt ist, ausgehend von der Schnittstelle 60 zweimal um 90° gewinkelt in einem u-förmigen Verlauf zu einer Messelementaufnahme 62. Die Messelementaufnahme 62 ist radial versetzt zu der Schnittstelle 60, welche zentral angeordnet ist, gelegen. Der Gehäusekörper 38 mit dem Kanalabschnitt 52b ist vorzugsweise ebenfalls in einem generativen bzw. additiven Fertigungsverfahren, insbesondere aus Metall, wie beispielsweise rostfreiem Edelstahl, gefertigt.

Die Messelementaufnahme 62 kommt an einem ersten Messelement 64 zur Anlage. Das Messelement 64 ist an der Leiterplatte 48 angeordnet, wobei die Leiterplatte 48 eine Öffnung aufweist, durch welche die Messelementaufnahme 62 an dem Messelement 64, welches an der ersten Seite 56 der Leiterplatte angeordnet ist, zur Anlage kommen kann. Der Kanalabschnitt 52b des Fluidkanals 52 endet so an einer zweiten Messfläche 66 des Messelementes 64. Das Messelement 64 ist ein Differenzdruckmesselement. An der ersten Messfläche 68, welche an der ersten Seite 56 der Leiterplatte 48 gelegen ist, endet ein zweiter Fluidkanal 70, welcher ebenfalls in dem Sensorkörper 34 ausgebildet ist. Der zweite Fluidkanal 70 verbindet eine Messelementaufnahme 72, welche der ersten Messfläche 68 des Messelementes 64 gegenüberliegt mit einer Druckaufnahmeöffnung 74. Die Druckaufnahmeöffnung 74 ist beabstandet vom distalen Ende des Sensorkörpers 34 im Bereich des zweiten Abschnittes 44 gelegen. So ist die Druckaufnahmeöffnung 74 in axialer Richtung Y von der am distalen Ende gelegenen Druckaufnahmeöffnung 76, an welcher der erste Fluidkanal 52 mündet, beabstandet. So kann der Drucksensor 24, wenn er, wie in Fig. 2 gezeigt, in das Basisgehäuse 2 eingesetzt ist, am distalen Ende über die Druckaufnahmeöffnung 76 den Druck im Saugkanal 30 erfassen. Gleichzeitig ist die Druckaufnahmeöffnung 74 zu dem Ringraum 32 hin geöffnet, um den Ausgangsdruck des Pumpenaggregates zu erfassen.

Der zweite Fluidkanal 70 in dem zweiten Abschnitt 44 des Sensorkörpers 34 weist einen komplexen mehrfach gewinkelten, im Ergebnis im Wesentlichen mäanderförmigen Verlauf auf. Durch den streckenweise gewinkelten bzw. zick-zack-förmigen Verlauf werden Reflektionsflächen geschaffen, welche Druckwellen reflektieren. So kann eine Druckwelle, welche in die Druckaufnahmeöffnung 74 eintritt, nicht ungehindert die Messfläche 68 an dem Messelement 64 erreichen. Es findet vielmehr eine Dämpfung statt, welche das Messelement 64 vor Beschädigungen schützt. Im Verlauf des Fluidkanals 70 ist darüber hinaus eine Querschnittserweiterung in Form eines zylindrischen Expansionsraumes 78 vorgesehen, welcher ebenfalls zur Dämpfung zur Verringerung von Kavitation bei auftretenden Unterdrücken dient. Im hier gezeigten Beispiel zweigt von dem zweiten Fluidkanal 70 darüber hinaus noch ein Spülanschluss 80 ab, welcher insbesondere für die Entlüftung vorgesehen ist und ggf. im Betrieb verschlossen sein kann. Neben dem Expansionsraum 78 weist der zweite Fluidkanal 70 noch einen ringförmigen Expansionsraum 82 auf, welcher ebenfalls zur Dämpfung von auftretenden Druckschwankungen und zur Verminderung von Kavitation dienen kann. Die Kontur des zweiten Fluidkanals 70, welcher in diesem Ausführungsbeispiel der Druckseite des Pumpenaggregates zugeordnet ist, kann in seinem Verlauf und seiner Kontur durch das gewählte generative Fertigungsverfahren für den zweiten Abschnitt 44 sehr flexibel angepasst werden, da sich komplizierte Geometrien ohne Weiteres ausbilden lassen. Auch der erste Fluidkanal 52 könnte in dieser Weise mit Richtungsänderungen und/oder Querschnittsänderungen versehen sein.

Als generatives Fertigungsverfahren kann beispielsweise das selektive Lasersintern oder ein ähnliches Verfahren zur Anwendung kommen. Zusätzlich zu den genannten Fluidkanälen ist in dem zweiten Abschnitt 44 des Sensorkörpers 34 darüber hinaus in diesem Beispiel ein Freiraum 84 ausgebildet, um Material zu sparen und die Fertigungszeit zu verkürzen. Die Fertigungszeit wird ebenfalls durch den beschriebenen Hybridaufbau mit dem vorgefertigten ersten Abschnitt 42 verkürzt, da dieser konventionell vorgefertigt werden kann. Alternativ ist es jedoch denkbar, auch den ersten Abschnitt 42 in einem generativen Fertigungsverfahren vorzufertigen und beispielsweise vor dem Aufbringen des zweiten Abschnittes 44 nachzubearbeiten, beispielsweise außenumfänglich zu schleifen oder zu polieren, um den Strömungswiderstand in dem Ringraum 32 zu minimieren.

Wenn der Gehäusekörper 38 an den Sensorkörper 34 angesetzt ist, liegen die Messelementaufnahmen 62 und 72 einander so gegenüber, dass das Messelement 64 zwischen ihnen dichtend eingeklemmt wird und so von beiden Seiten zur Differenzdruckmessung mit Druck beaufschlagt werden kann. An der Leiterplatte 48 ist darüber hinaus ein zweites Messelement 86 angeordnet, welches dafür vorgesehen ist, den Umgebungsdruck zu erfassen. Dazu ist in dem Gehäusekörper 38, wie in Fig. 5A gezeigt, ein dritter Fluidkanal 88 ausgebildet. Der Fluidkanal 88 erstreckt sich ausgehend von einer Messelementaufnahme 90 zu einer Öffnung 92 in den Deckel 40. Der dritte Fluidkanal 88 verläuft dabei bogenförmig, so dass es nicht möglich ist, einen geraden Gegenstand durch die Öffnung 92 und durch den gesamten dritten Fluidkanal 88 hindurch bis zu dem Messelementaufnahme 90 einzuführen. Dadurch wird das Messelement 86 vor Beschädigungen geschützt. Der dritte Fluidkanal 88 bringt den Umgebungsdruck an das Messelement 86. Dazu liegt die Messelementaufnahme 90, welche eine Öffnung in der Leiterplatte 48 durchgreift, an einer Messfläche des Messelementes 86 an. Das Messelement 86 ist ebenfalls an der ersten Seite der Leiterplatte 48 angeordnet. Um eine Kraftentkopplung zwischen den Messelementen 64 und 86 zu erreichen, weist die Leiterplatte 48 eine Aussparung in Form eines sich radial erstreckenden Schlitzes 94 auf. Dieser erstreckt sich vom Außenumfang in radialer Richtung bis zu der Ausnehmung 54. Der Schlitz 94 ermöglicht eine gewisse Verformbarkeit der Leiterplatte 48. Neben den beschriebenen Messelementen 64 und 86 trägt die Leiterplatte 48 weitere elektronische Bauteile zur Messwerterfassung und Auswertung und stellt die Verbindung zu einem Anschlussstecker 96 des Drucksensors her.

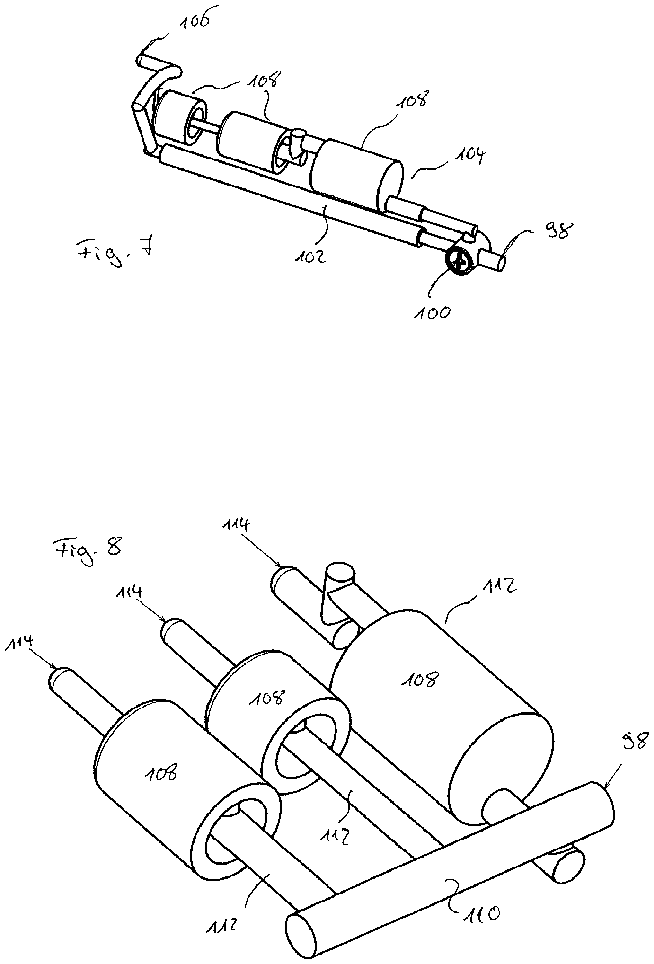

Wie beschrieben, ermöglicht die generative Fertigung der Struktur, in welcher die Fluidkanäle ausgebildet sind, unterschiedliche Verläufe bzw. Geometrien der Fluidkanäle, um verschiedene Dämpfungseigenschaften zu erzielen. Anhand der Fig. 7 bis 11 werden weitere mögliche Geometrien für derartige Fluidkanäle in einen Drucksensor beschrieben.

Bei dem Ausführungsbeispiel gemäß Fig. 7 gibt es eine Druckaufnahmeöffnung 98 von der ausgehend ein Fluidkanal zu einer Ventileinrichtung 100 verläuft, über welche die Verbindung wahlweise zu einem Fluidkanal 102 oder Fluidkanal 104 umschaltbar ist. Die Ventileinrichtung 100 kann ebenfalls in der generativ gefertigten Struktur mit ausgebildet werden, wobei vorzugsweise auch das bewegliche Ventilelement mit integral ausgebildet wird. Der Fluidkanal 102 verläuft relativ direkt mit drei Abwinklungen zu einer ersten Messelementaufnahme 106. Der zweite Fluidkanal 104 hat eine komplexere Geometrie mit drei Expansionsräumen 108 und mehreren Abwicklungen. Der Fluidkanal 104 mündet vor der Messelementaufnahme 106 wieder in den anderen Fluidkanal 102. Durch Umschalten der Ventileinrichtung 100 kann wahlweise der Fluidkanal 102 oder der Fluidkanal 104 zur Verbindung mit der Messelementaufnahme 106 genutzt werden. So kann der Sensor an verschiedene Anwendungsfälle angepasst werden.

In Fig. 8 ist eine weitere mögliche Ausgestaltung gezeigt. Dort ist ebenfalls eine Druckaufnahmeöffnung 98 vorgesehen, an welche sich ein gemeinsamer Kanalabschnitt 110 anschließt. Von diesem gemeinsamen Kanalabschnitt 110 zweigen drei Kanalabschnitte 112 zu drei Messelementaufnahmen 114 ab. Die drei Kanalabschnitte 112 weisen unterschiedliche Geometrien mit unterschiedlichen Abwinklungen und unterschiedlich geformten Expansionsräumen auf. Bei diesem Ausführungsbeispiel sind alle drei Messelementaufnahmen 114 über die drei Kanalabschnitte 112 ständig in Verbindung mit der Druckaufnahmeöffnung 98. Ein solcher Sensor kann dadurch an verschiedene Einsatzzwecke angepasst werden, dass wahlweise eines von drei Messelementen, welche an den Messelementaufnahmen 114 anliegen, aktiviert wird und die anderen zwei beispielsweise nicht genutzt werden. So kann eine rein elektronische Anpassung an verschiedene Einsatzmöglichkeiten erreicht werden.

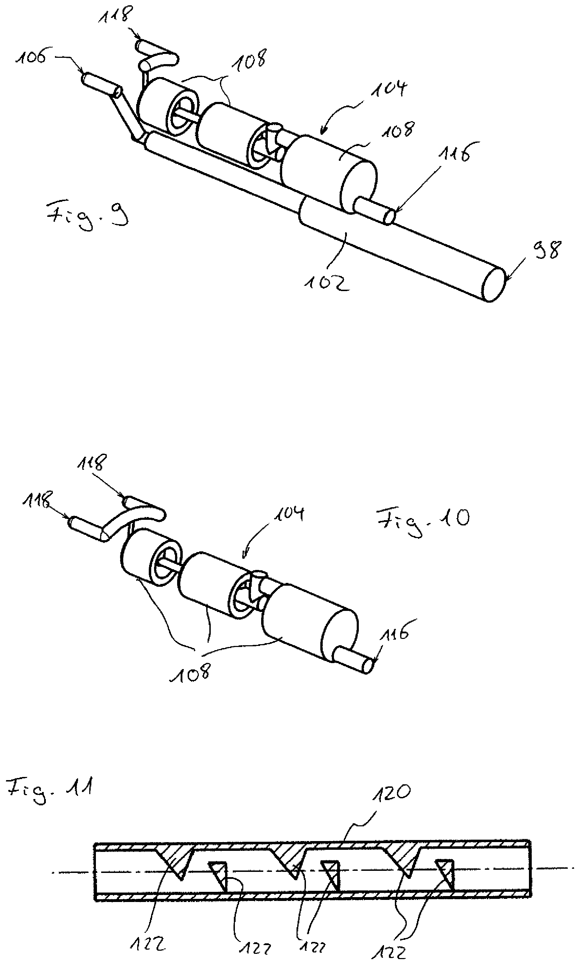

Fig. 9 zeigt ein Ausführungsbeispiel ähnlich dem Ausführungsbeispiel in Fig. 7 mit dem Unterschied, dass kein Ventilelement 100 vorgesehen ist, sondern der Fluidkanal 104, an einer zweiten Druckaufnahmeöffnung 116 endet. Ferner endet der Fluidkanal 104 an einer eigenen Messelementaufnahme 118. So können auch hier zwei Messelemente an den Messelementaufnahmen 106 und 118 angeordnet werden und es kann eine Anpassung des Sensors durch Aktivierung des jeweiligen Messelementes erreicht werden, sodass wahlweise für die Druckübertragung der Fluidkanal 102 oder der Fluidkanal 104 genutzt wird. Auch könnte ein solcher Sensor zur Differenzdruckmessung genutzt werden, indem die Druckaufnahmeöffnungen 98 und 116 an verschiedenen Stellen eines Aggregates platziert werden, wie es oben anhand von Fig. 2 beschrieben wurde. Für eine solche Differenzdruckmessung würden dann die Messelementaufnahmen 106 und 118 beide genutzt bzw. ähnlich dem ersten Ausführungsbeispiel mit zwei Seiten eines Differenzdruck-Messelementes in Kontakt gebracht.

Ein viertes mögliches Ausführungsbeispiel für einen Fluidkanal ist in Fig. 10 gezeigt. Dort entspricht der Fluidkanal im Wesentlichen dem Fluidkanal 104 gemäß Fig. 9. An dem der Druckaufnahmeöffnung 116 angewandten Ende verzweigt sich hier der Fluidkanal 104 zu zwei Messelementaufnahmen 118, sodass der Druck in dem Fluidkanal 104 gleichzeitig auf zwei Messelemente wirken kann, von denen beispielsweise ein Messelement zur Differenzdruckmessung und das andere für eine Absolutdruckmessung verwendet wird.

Allen vier Ausführungsbeispielen gemäß Fig. 7 bis 10 ist gemeinsam, dass neben unterschiedlich geformten Richtungsänderungen verschieden geformte Expansionsräume 108 zur Anwendung kommen können, wobei diese beispielsweise ringförmig wie der Expansionsraum 82 in Fig. 6 oder zylindrisch wie der Expansionsraum 78 in Fig. 6 ausgebildet sein können.

Fig. 11 zeigt eine weitere Geometrie eines Fluidkanals 120, welcher durch ein generatives Fertigungsverfahren ausgebildet werden kann. Dieser Fluidkanal 120 weist in seinem Inneren Vorsprünge 122 auf, welchen einen mäanderförmigen Verlauf des freien Durchganges des Strömungskanals 120 bewirken. Auch durch solch einen Kanalverlauf kann eine Dämpfung von Druckwellen bzw. Druckimpulsen erreicht werden.

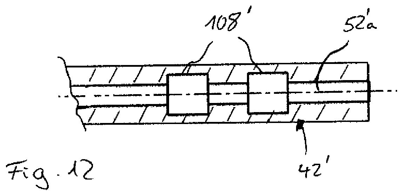

Fig. 12 zeigt ein weiteres Ausführungsbeispiel eines Fluidkanals, wie er in dem vorangehend beschriebenen Drucksensor zum Einsatz kommen kann. So zeigt Fig. 12 eine Variante der Ausgestaltung des ersten Fluidkanals 52 in dem Sensorkörper 34. Fig. 12 zeigt den ersten Abschnitt 42' eines Drucksensors, wie er in Fig. 6 im Schnitt dargestellt ist. In diesem Ausführungsbeispiel weist im Unterschied zu der Ausführungsform in Fig. 6 der Kanalabschnitt 52'a des ersten Fluidkanals 52 zwei Expansionsräume 108' auf. Diese bilden jeweils ein zusätzliches Fluidvolumen, welches vorteilhaft ist, um bei auftretenden Unterdrücken Kavitation im Bereich des Messelementes 64 zu verhindern. Es ist zu verstehen, dass derartige Kanaleigenschaften, welche zur Verhinderung von Kavitation dienen, im Falle des ersten Fluidkanals 52 auch in dem zweiten Kanalabschnitt 52b ausgebildet sein könnten. Im Übrigen ist zu verstehen, dass alle beschriebenen Fluidkanäle in ihrer geometrischen Gestaltung in beliebiger Kombination der vorangehend beschriebenen Gestaltungsmöglichkeiten gestaltet sein können, um angepasst an verschiedene Einsatzzwecke Druckimpulse bzw. Wasserschlag und/oder das Auftreten von Kavitation zu verringern.

### Bezugszeichenliste

- 2: Basisgehäuse
- 4: Einlassstutzen
- 6: Auslassstutzen
- 8: Laufräder
- 10: Leiterapparat
- 12: Welle
- 14: Kupplung
- 16: Antriebsmotor
- 18: inneres Gehäuse
- 20: äußeres Gehäuse
- 22: Kanal
- 24: Drucksensor
- 26: Öffnung
- 28: Öffnung
- 30: Saugkanal
- 32: Ringraum
- 34: Sensorkörper
- 36: Elektronikgehäuse
- 38: Gehäusekörper
- 40: Deckel
- 42, 42': erster Abschnitt des Sensorkörpers
- 44: zweiter Abschnitt des Sensorkörpers
- 46: Aufnahmeraum
- 48: Leiterplatte
- 50: Verbindungsebene
- 52: erster Fluidkanal
- 52a, 52'a: erster Kanalabschnitt
- 52b: zweiter Kanalabschnitt
- 54: Ausnehmung
- 56: erste Seite der Leiterplatte
- 58: zweite Seite der Leiterplatte
- 60: Schnittstelle
- 62: Messelementaufnahme
- 64: Messelement
- 66: zweite Messfläche
- 68: erste Messfläche
- 70: zweiter Fluidkanal
- 72: Messelementaufnahme
- 74,76: Druckaufnahmeöffnung
- 78: Expansionsraum
- 80: Spülanschluss
- 82: Expansionsraum
- 84: Freiraum
- 86: Messelement
- 88: dritter Fluidkanal
- 90: Messelementaufnahme
- 92: Öffnung
- 94: Schlitz
- 96: Anschlussstecker
- 98: Druckaufnahmeöffnung
- 100: Ventileinrichtung
- 102, 104: Fluidkanäle
- 106: Messelementaufnahme
- 108, 108': Expansionsräume
- 110, 112: Kanalabschnitte
- 114: Messelementaufnahme
- 116: Druckaufnahmeöffnung
- 118: Messelementaufnahme
- 120: Fluidkanal
- 122: Vorsprünge
- Y: Längsachse des Sensors
- X: Drehachse des Pumpenaggregates

## Patentansprüche

1. Drucksensor mit zumindest einem Messelement (64) und zumindest einem in einem Sensorkörper (34) angeordneten Fluidkanal (70), welcher eine Druckaufnahmeöffnung (74) mit dem Messelement (64) verbindet, **dadurch gekennzeichnet, dass** der Fluidkanal (70) zumindest eine Querschnitts- und/oder Richtungsänderung aufweist,
und, dass
zumindest ein Abschnitt des Fluidkanals (70), in welchem die zumindest eine Querschnitts- und/oder Richtungsänderung gelegen ist, in einer in einem generativen Fertigungsverfahren gefertigten Struktur (44) des Sensorkörpers (34) ausgebildet ist.

2. Drucksensor nach Anspruch 1, **dadurch gekennzeichnet, dass** die in einem generativen Fertigungsverfahren gefertigte Struktur aus Kunststoff oder Metall, insbesondere rostfreiem Edelstahl gefertigt ist.

3. Drucksensor nach Anspruch 1 oder 2, **dadurch gekennzeichnet, dass** zumindest die in einem generativen Fertigungsverfahren gefertigte, den Abschnitt des Fluidkanals (70) ausbildende Struktur (44) einstückig ist.

4. Drucksensor nach einem der vorangehenden Ansprüche, **dadurch gekennzeichnet, dass** der Fluidkanal (70) innerhalb der in einem generativen Fertigungsverfahren gefertigten Struktur (44) mehrere Richtungsänderungen und insbesondere einen zick-zack- oder mäanderförmigen Verlauf aufweist.

5. Drucksensor nach einem der vorangehenden Ansprüche, **dadurch gekennzeichnet, dass** der Fluidkanal (70) innerhalb der in einem generativen Fertigungsverfahren gefertigten Struktur (44) mehrere Richtungsänderungen in zumindest zwei unterschiedlichen Ebenen aufweist.

6. Drucksensor nach einem der vorangehenden Ansprüche, **dadurch gekennzeichnet, dass** der Fluidkanal (70) innerhalb der in einem generativen Fertigungsverfahren gefertigten Struktur (44) eine Form aufweist, welche zumindest eine Reflektion einer durch die Druckaufnahmeöffnung in den Fluidkanal eintretenden Druckwelle bewirkt.

7. Drucksensor nach einem der vorangehenden Ansprüche, **dadurch gekennzeichnet, dass** der Fluidkanal (70) innerhalb der in einem generativen Fertigungsverfahren gefertigten Struktur (44) zumindest einen, vorzugsweise mehrere Expansionsräume (78, 82) aufweist.

8. Drucksensor nach einem der vorangehenden Ansprüche, **dadurch gekennzeichnet, dass** der Fluidkanal (110, 112) innerhalb der in einem generativen Fertigungsverfahren gefertigten Struktur zumindest eine Verzweigung aufweist, wobei der Fluidkanal (110, 112) vorzugsweise zu mehreren Messelementen verzweigt.

9. Drucksensor nach einem der vorangehenden Ansprüche, **gekennzeichnet durch** mehrere in einem Sensorkörper (34) ausgebildete Fluidkanäle (52, 70), welche eine oder mehrere Druckaufnahmeöffnungen (74, 76) mit jeweils einem Messelement (64) verbinden und von welchen jeweils zumindest ein Abschnitt in einer in einem generativen Fertigungsverfahren gefertigten Struktur (44) ausgebildet ist.

10. Drucksensor nach einem der vorangehenden Ansprüche, **dadurch gekennzeichnet, dass** der Fluidkanal (102, 104) innerhalb der in einem generativen Fertigungsverfahren gefertigten Struktur zumindest ein Ventil (100) aufweist, welches vorzugsweise ebenfalls in einem generativen Fertigungsverfahren gefertigt ist.

11. Drucksensor nach einem der vorangehenden Ansprüche, **dadurch gekennzeichnet, dass** ein weiterer Abschnitt des Fluidkanals (52) in einem Bauteil (42) ausgebildet ist, mit welchem die in einem generativen Fertigungsverfahren generierte Struktur (44) durch den generativen Fertigungsvorgang verbunden ist.

12. Drucksensor nach einem der vorangehenden Ansprüche, **dadurch gekennzeichnet, dass** er als Differenzdrucksensor ausgebildet ist, bei welchem ein erster Fluidkanal (70) mit einer ersten Seite eines Differenzdruckmesselementes (64) und ein zweiter Fluidkanal (52) mit einer zweiten Seite des Differenzdruckmesselementes (64) verbunden ist.

13. Drucksensor nach Anspruch 12, **dadurch gekennzeichnet, dass** in zumindest einem der Fluidkanäle (70) in der in einem generativen Fertigungsverfahren gefertigten Struktur (44) eine Druckstöße dämpfende Formgebung des Fluidkanals (70) ausgebildet ist.

14. Drucksensor nach Anspruch 12 oder 13, **dadurch gekennzeichnet, dass** in zumindest einem der Fluidkanäle (70) in der in einem generativen Fertigungsverfahren gefertigten Struktur eine Kavitation verringernde Formgebung des Fluidkanals (70) ausgebildet ist.

15. Drucksensor nach einem der vorangehenden Ansprüche, **gekennzeichnet durch** zumindest zwei Fluidkanäle (112), welche jeweils zumindest einen Abschnitt aufweisen, in welchem die zumindest eine Querschnitts- und/oder Richtungsänderung gelegen ist und welcher in einer in einem generativen Fertigungsverfahren gefertigten Struktur des Sensorkörpers ausgebildet ist, wobei die mehreren Fluidkanäle (112) vorzugsweise eine unterschiedliche Gestalt aufweisen.

16. Pumpenaggregat, **dadurch gekennzeichnet, dass** es einen Drucksensor nach einem der vorangehenden Ansprüche aufweist, wobei der Drucksensor vorzugsweise als Differenzdrucksensor ausgebildet ist, welcher zwischen der Saug- und der Druckseite des Pumpenaggregates angeordnet ist.
